# EUROPEAN PATENT SPECIFICATION

(11) **EP 2 694 586 B1**
(45) Date of publication and mention of the grant of the patent: **24.01.2018**
(21) Application number: 12713834.5
(22) Date of filing: 02.04.2012
(51) Int. Cl.: B29C 45/00, C08L 67/02, B29C 45/17, C08K 7/14, C08K 5/00

(54) **HOLLOW ARTICLES COMPRISING FIBER-FILLED POLYESTER COMPOSITIONS, METHODS OF MANUFACTURE, AND USES THEREOF**
HOHLKÖRPER AUS MIT GLASFASERN GEFÜLLTEN POLYESTERZUSAMMENSETZUNGEN , VERFAHREN ZU IHRER HERSTELLUNG UND IHRE VERWENDUNGEN
ARTICLES CREUX COMPRENANT DES COMPOSITIONS DE POLYESTER CHARGÉES EN FIBRES, MÉTHODE POUR LES FAIRE ET LEUR UTILISATION

(30) Priority: 01.04.2011 US 201113078432
(43) Date of publication of application: 12.02.2014
(73) Proprietor: SABIC Global Technologies B.V., 4612 PX Bergen op Zoom (NL)
(72) Inventor: KONDURI, Rama, Mt. Vernon, IN 47620-9367 (US); GALLUCCI, Robert R., Mt. Vernon, Indiana 47620 (US); DAVIS, Scott, Great Barrington, Massachusetts 01230 (US)
(74) Representative: Stiebe, Lars Magnus
(86) International application number: PCT/US2012/031858
(87) International publication number: WO 2012/135829

(56) References cited:
- WO-A1-2010/027351
- US-A- 4 444 931
- US-A- 5 496 880
- DATABASE WPI Week 199918 Thomson Scientific, London, GB; AN 1999-210964 XP002675565, & JP 11 049937 A (POLYPLASTICS KK) 23 February 1999 (1999-02-23)

## Description

### BACKGROUND

This invention relates to hollow articles formed from glass fiber-filled polyester thermoplastic compositions, their method of manufacture, and uses of the articles.

Thermoplastic polyester compositions have valuable characteristics including mechanical strength, toughness, good gloss, and solvent resistance. Polyesters, therefore, have utility as materials for a wide range of applications, from automotive parts to electrical and electronic parts to home appliances. Polyesters are also used for molded items because of their high thermal and flow properties.

Glass or other reinforcing fibers are sometimes used to further improve mechanical and other properties. Such fibers can impart dimensional stability to the molded articles and decrease shrinkage of the article upon cooling in the mold. A problem has been, however, that surface roughness often arises from the inclusion of glass fibers in the polyester compositions used in the molded article. Particularly when the molded article is visible during use, for example, as a handle or other external part of an apparatus or its housing, it is desirable that the molded article possess satisfactory gloss with little or no surface roughness and without requiring a coating or further treatment to improve gloss.

It is therefore be desirable to obtain a molded article based on fiber-filled polyester compositions that have high gloss and no surface defects visible to the eye, which still has the advantages of glass fibers but without surface roughness due to glass fibers. For various reasons, it can also be desirable for such molded articles to have a hollow core.

Hollow molded articles can be made, among various molding techniques, by gas-assisted injection molding. Such a process utilizes an inert gas, for example nitrogen, to create one or more hollow channels within the molded article. In one such method, a polymer composition is injected into a mold and then an inert gas is injected into the melt either through a nozzle or a mold mounted injector pin. The gas forces the melt against the walls of the mold, forming a solid wall and a hollow cross-section. The gas follows the path of least resistance in forming hollow areas. Among the advantages of gas-assisted injection molding is improved dimensional stability and the elimination of sink marks. Gas-assisted injection molding can be applicable to thermoplastic materials that include polypropylene, polycarbonate, nylon, and polyester, for use in making consumer goods, office equipment, computer enclosures, automotive parts, and the like.

U.S. Patent No. 4,122,061 discloses a polyester molding composition reinforced with fiber glass comprising a combination of polybutylene terephthalate and polyethylene terephthalate, in combination with a linear low density polyethylene, for improved weld line strength in molding. U.S. Patent No. 4,564,658 discloses another polyester molding composition reinforced with glass fiber that comprises a combination of polybutylene terephthalate and polyethylene terephthalate having, in addition, an impact modifier for improved impact strength. U.S. Patent No. 6,187,848 discloses a polyester molding composition reinforced with glass fiber comprising a combination of polybutylene terephthalate and polyethylene terephthalate, which has increased color stability. The latter patent mentions applications that include oven handles or trim.

In general, the use of gas-assisted injection molding systems for the construction of one-piece plastic articles is known, for example, as described in U.S. Patent No. 6,322,865; U.S. Patent No. 6,462,167 and U.S. Patent No. 7,255,818.

There remains a strong need for hollow articles made from glass-fiber filled polyester compositions that have excellent surface gloss in which further the glossy region of the article shows little variation in gloss and appearance, in addition to desirable mechanical properties such as impact strength.

### BRIEF SUMMARY OF THE INVENTION

In view of the above-described problems, the present invention is directed to a hollow molded article, comprising a surface of which at least a portion is a glossy surface, which is integrally molded from a thermoplastic polyester composition, (a) wherein the composition comprises: 28 to 50 wt.% polybutylene terephthalate having a melting point of 210 to 230°C, as measured according to ASTM D3418, 10 to 30 wt.% of a plurality of glass fibers having a diameter of 9 to 20 micrometers; 20 to 62 wt.% polyethylene terephthalate having a melting point of 240 to 260°C, as measured according to ASTM D3418, and a diethylene glycol group content of 0.5 to 2.5 wt.%, and 0 to 5 wt.% of a colorant, an antioxidant, a mold release agent, a stabilizer, or a combination thereof, based on 100 parts by weight of the combination of the polybutylene terephthalate, glass fiber and polyethylene terephthalate; (b) wherein at least 10 % of the surface area of the article has a glossy surface, which forms a continuous glossy region having a gloss of at least 75 gloss units, as measured at 60 degrees in accordance with ASTM D523; and (c) wherein the gloss varies from the average gloss less than 10 gloss units in the glossy region, as determined by measuring the interior of the glossy region at each of six equally spaced adjacent locations within the boundary of the glossy region, from the end gate of the article in the longitudinal direction of the glossy region, calculating the average gloss, and then taking the standard deviation. In one embodiment, the hollow molded article is made by a process in which the thermoplastic polyester composition is gas-assisted injection molded.

In another embodiment, the invention is directed to a hollow molded article, comprising a surface of which at least a portion is a glossy surface, which is integrally molded from a thermoplastic polyester composition, (a) wherein the composition comprises 35 to 45 wt.% polybutylene terephthalate having a melting point of 210 to 230°C, 10 to 20 wt.% of a plurality of glass fibers having a diameter of 9 to 15 micrometers, 30 to 54.9 wt.% polyethylene terephthalate having a melting point of 240 to 260°C and a diethylene glycol group content of 0.5 to 2.5 wt.%, 0.1 to 5 parts by weight of a colorant, based on 100 parts by weight of the combination of the polybutylene terephthalate, glass fiber and polyethylene terephthalate, and 0 to 5 wt.% of an antioxidant, a mold release agent, a stabilizer, or a combination thereof, based on 100 parts by weight of the combination of the polybutylene terephthalate, glass fiber and polyethylene terephthalate; (b) wherein at least 10 % of the surface area of the article has the glossy surface, which forms a continuous glossy region having a gloss of at least 80 gloss units, as measured at 60 degrees in accordance with ASTM D523; and (c) wherein gloss varies from the average less than 10 gloss units in the glossy region.

Specifically, gloss varies from the average less than 7.5 gloss units in the glossy region of the hollow molded article.

Also disclosed is a method for the manufacture of the foregoing hollow molded articles by gas-assisted injection molding. In particular, hollow molded articles having excellent surface gloss can be obtained.

Finally, another aspect of the invention relates to the use of such hollow molded articles as handles for various apparatus, including large appliances. Such handles that can be grasped and moved to move the entire appliance or a part thereof, for example manually grasped by a person.

### DETAILED DESCRIPTION OF THE INVENTION

Our invention is based on the discovery that it is possible to make hollow molded articles comprised of a glass-fiber reinforced polyester composition that provides uniformly excellent surface gloss such that the glossy region has a gloss of at least 75 gloss units, as measured at 60 degrees in accordance with ASTM D523, and the gloss varies from the average less than 10 gloss units in the glossy region. Such hollow molded articles comprising the glass-filled polyester composition can also exhibit desirable mechanical properties. In particular, the articles can exhibit at least one, or all, of useful impact strength properties and heat stability, in addition to high gloss, on its outer or visible surface, free of surface defects.

As used herein the singular forms "a," "an," and "the" include plural referents. "Or" means "and/or." The term "combination" is inclusive of blends, combinations, alloys, reaction products, and the like and may include more than one of component of each type specified. Unless defined otherwise, technical and scientific terms used herein have the same meaning as is commonly understood by one of skill. Compounds are described using standard nomenclature. The term "and a combination thereof' is inclusive of the named component and/or other components not specifically named that have essentially the same function.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount.

All ASTM tests and data are from the 2003 edition of the Annual Book of ASTM Standards unless otherwise indicated. All cited references are incorporated herein by reference.

The hollow molded articles of the present invention may be used as a component for a large appliance, a vehicle, office equipment, luggage, or an electronic consumer device.

A large appliance, as used herein, is defined as a machine that accomplishes some routine housekeeping task, which includes purposes such as cooking, food preservation, or cleaning, whether in a household, institutional, commercial, or industrial setting. Examples of large appliances include, but are not limited to, ovens, refrigerators, freezers, and dishwashers. Such large appliances can have a volume of more than 10,000 cm³, specifically more than 100,000 cm³, up to, for example 700,000 cm³. For example, a dishwasher can have a volume of about 300,000 cm³.

For the sake of clarity, the terms "terephthalic acid group," "isophthalic acid group," "butanediol group," and "ethylene glycol group" have the following meanings. The term "terephthalic acid group" in a composition refers to a divalent 1,4-benzene radical (-1,4-(C₆H₄)-) remaining after removal of the carboxylic groups from terephthalic acid. The "butanediol group" refers to a divalent butylene radical (-(C₄H₈)-) remaining after removal of hydroxyl groups from butanediol. The term "ethylene glycol group" refers to a divalent ethylene radical (-(C₂H₄)-) remaining after removal of hydroxyl groups from ethylene glycol. The term "diethylene glycol group" refers to a divalent diethylene radical (-(C₂H₄OC₂H₄)-) remaining after removal of hydroxyl groups from diethylene glycol. With respect to the terms "terephthalic acid group," "ethylene glycol group," "butanediol group," and "diethylene glycol group" being used in other contexts, e.g., to indicate the weight % of the group in a composition, the term "isophthalic acid group(s)" means the group having the formula (-O(CO)C₆H₄(CO)-), the term "terephthalic acid group" means the group having the formula (-O(CO)C₆H₄(CO)-), the term diethylene glycol group means the group having the formula (-O(C₂H₄)O(C₂H₄)-), the term "butanediol group" means the group having the formula (-O(C₄H₈)-), and the term "ethylene glycol group" means the group having formula (-O(C₂H₄)-).

As indicated above, the present hollow articles are made from a special blend of thermoplastic compositions. Polyesters, in general, having repeating structural units of formula (I) 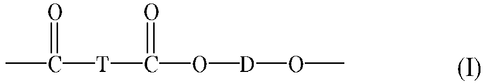 wherein each T is independently the same or different divalent C₆₋₁₀ aromatic group derived from a dicarboxylic acid or a chemical equivalent thereof, and each D is independently a divalent C₂₋₄ alkylene group derived from a dihydroxy compound or a chemical equivalent thereof.

Copolyesters can contain a combination of different T and/or D groups. Chemical equivalents of diacids include the corresponding esters, alkyl esters, e.g., C₁₋₃ dialkyl esters, diaryl esters, anhydrides, salts, acid chlorides, acid bromides, and the like. Chemical equivalents of dihydroxy compounds include the corresponding esters, such as C₁₋₃ dialkyl esters, diaryl esters, and the like. The polyesters can be branched or linear. Exemplary polyesters include poly(alkylene terephthalate) ("PAT"), poly(1,4-butylene terephthalate), ("PBT"), poly(ethylene terephthalate) ("PET"), poly(ethylene naphthalate) ("PEN"), poly(butylene naphthalate), ("PBN"), poly(propylene terephthalate) ("PPT"), poly(cyclohexane dimethanol terephthalate) ("PCT"), poly(cyclohexane-1,4-dimethylene cyclohexane-1,4-dicarboxylate) also known as poly(1,4-cyclohexanedimethanol 1,4-dicarboxylate) ("PCCD"), poly(cyclohexanedimethanol terephthalate), poly(cyclohexylenedimethylene-co-ethylene terephthalate), cyclohexanedimethanol-terephthalic acid-isophthalic acid copolymers and cyclohexanedimethanol-terephthalic acidethylene glycol ("PCTG" or "PETG") copolymers. When the molar proportion of cyclohexanedimethanol is higher than that of ethylene glycol the polyester is termed PCTG. When the molar proportion of ethylene glycol is higher than that of cyclohexane dimethanol the polyester is termed PETG.

Polyesters can be obtained by methods well known to those skilled in the art, including, for example, interfacial polymerization, melt-process condensation, solution phase condensation, and transesterification polymerization. Such polyester resins are typically obtained through the condensation or ester interchange polymerization of the diol or diol equivalent component with the diacid or diacid chemical equivalent component. Methods for making polyesters and the use of polyesters in thermoplastic molding compositions are known in the art. Conventional polycondensation procedures are described in U.S. Pat. Nos. 2,465,319, 5,367,011, and 5,411,999. The condensation reaction can be facilitated by the use of a catalyst, with the choice of catalyst being determined by the nature of the reactants. The various catalysts are known in the art. For example, a dialkyl ester such as dimethyl terephthalate can be transesterified with butylene glycol using acid catalysis, to generate poly(butylene terephthalate). It is possible to use branched polyester in which a branching agent, for example, a glycol having three or more hydroxyl groups or a trifunctional or multifunctional carboxylic acid has been incorporated.

In the polyester composition comprising the article of the present invention, the ratio of polybutylene terephthalate to polyethylene terephthalate can specifically vary from 0.50 to 1.20.

Without wishing to be bound by theory, the use of polyethylene terephthalate with a diethylene glycol group content of from 0.5 to 2.5 wt.%, more specifically 0.7 to 2.0 wt.%, is believed to contribute to the glossiness of the article surface by affecting the onset and/or rate of crystallization. During gas-assist molding the molten polyester is pushed against the relatively cold walls of the tool cavity and its crystallization is believed to significantly affect the surface gloss produced as the material solidifies.

Specifically, the polyester composition can comprise 35 to 45 wt.% polybutylene terephthalate, with a melting point of 210 to 230°C, and 10 to 20 wt.% of a plurality of glass fibers having a diameter of 9 to 15 micrometers.

Commercial examples of polybutylene terephthalate include, for example, those available under the trade names VALOX 315 and VALOX 195, manufactured by SABIC Innovative Plastics. Commercial examples of polyethylene terephthalate are commonly available from a variety of suppliers. Polyethylene terephthalate that comprises terephthalic acid, ethylene glycol, and diethylene glycol (DEG) groups can be made employing conventional processes. Processes and catalysts for making polyethylene terephthalate are described, for example, in WO 2010/105787 and WO 2010/102795. The DEG content can be determined by transesterifying the polymer with methanol in an autoclave at 220°C, by which the polymer is depolymerized, and the DEG liberated as the diol. The liquid formed can then be analyzed by gas chromatography.

In one embodiment, the polyethylene terephthalate can have an intrinsic viscosity, of 0.50 to 1.10 dl/g and the polybutylene terephthalate can have an intrinsic viscosity of 0.5 to 0.9 dl/g, wherein deciliters per gram is measured in a 60:40 by weight phenol/1,1,2,2-tetrachloroethane combination at 23°C.

A combination of polyester resins of the same polyester formula, with differing viscosities, can be used to make a blend in order to allow for control of viscosity of the final formulation. Surprisingly, as shown herein in Table 2, it was found that the intrinsic viscosity of the polyethylene terephthalate in the polyester composition did not significantly affect the gloss obtained, for the viscosities actually tested, as compared to the diethylene glycol group content.

A combination a virgin polyester (polyesters derived from monomers) and recycled or modified polyester can also be utilized, including virgin and/or modified poly(1,4-butylene terephthalate) obtained from recycled polyethylene terephthalate. Modified polybutylene terephthalate, in addition to comprising terephthalic acid groups and butanediol groups, can also comprise residues diethylene glycol.

Also contemplated herein is optionally from 0.1 to 10 wt.%, specifically 0 to 5 wt.% based on the total weight of the polymers in the composition used herein, of further polyesters. Such polyesters can be selected from the group consisting of polyethylene naphthalate, polybutylene naphthalate, polytrimethylene terephthalate, poly(1,4-cyclohexylenedimethylene 1,4-cyclohexanedicarboxylate), poly(1,4-cyclohexylenedimethylene terephthalate), poly(cyclohexylenedimethylene-co-ethylene terephthalate), or a combination comprising at least one of the foregoing polyesters.

Such optional polyesters can comprise minor amounts, e.g., 0.5 to 30 wt%, of units derived from aliphatic acids and/or aliphatic polyols to form copolyesters. The aliphatic polyols include glycols, such as poly(ethylene glycol). Such polyesters can be made following the teachings of, for example, U.S. Pat. Nos. 2,465,319 to Whinfield et al., and 3,047,539 to Pengilly. Optional polyesters comprising block copolyester resin components are also contemplated, and can be prepared by the transesterification of (a) straight or branched chain poly(alkylene terephthalate) and (b) a copolyester of a linear aliphatic dicarboxylic acid and, optionally, an aromatic dibasic acid such as terephthalic or isophthalic acid with one or more straight or branched chain dihydric aliphatic glycols. Of use when high melt strength is important are branched high melt viscosity resins, which include a small amount of, e.g., up to 5 mole percent based on the acid units of a branching component containing at least three ester forming groups. The branching component can be one that provides branching in the acid unit portion of the polyester, in the glycol unit portion, or it can be a hybrid branching agent that includes both acid and alcohol functionality. Illustrative of such branching components are tricarboxylic acids, such as trimesic acid, and lower alkyl esters thereof, and the like; tetracarboxylic acids, such as pyromellitic acid, and lower alkyl esters thereof, and the like; or preferably, polyols, and especially preferably, tetrols, such as pentaerythritol; triols, such as trimethylolpropane; dihydroxy carboxylic acids; and hydroxydicarboxylic acids and derivatives, such as dimethyl hydroxyterephthalate, and the like. Branched poly(alkylene terephthalate) resins and their preparation are described, for example, in U.S. Pat. No. 3,953,404 to Borman. In addition to terephthalic acid units, small amounts, e.g., from 0.5 to 15 mole percent of other aromatic dicarboxylic acids, such as isophthalic acid or naphthalene dicarboxylic acid, or aliphatic dicarboxylic acids, such as adipic acid, can also be present, as well as a minor amount of diol component other than that derived from 1,4-butanediol, such as ethylene glycol or cyclohexane dimethanol, etc., as well as minor amounts of trifunctional, or higher, branching components, e.g., pentaerythritol, trimethyl trimesate, and the like. The polyester composition can also optionally further comprise from 0 to 10 wt.%, specifically 0 to 5 wt.%, based on the total weight of the polymers in the composition, of an aromatic copolyester carbonate.

Any of the foregoing optional polyesters can have an intrinsic viscosity of 0.4 to 2.0 deciliters per gram (dL/g), measured in a 60:40 by weight phenol/1,1,2,2-tetrachloroethane combination at 23°C. The optional polyesters can have a weight average
molecular weight of 10,000 to 200,000 Daltons, specifically 50,000 to 150,000 Daltons as measured by gel permeation chromatography (GPC).

The thermoplastic polyester composition for making the hollow molded articles of the present invention further comprises glass fibers that can typically have a modulus of greater than or equal to about 6,800 megaPascals (MPa), and which can be chopped or continuous. The glass fiber can have various cross-sections, for example, round, trapezoidal, rectangular, square, crescent, bilobal, trilobal, and hexagonal. In one embodiment, the glass is relatively soda free. Fibrous glass fibers comprised of limealumino-borosilicate glass, which is also known as "E" glass are especially preferred. Glass fiber can greatly increase the flexural modulus and strength. The glass fibers can be made by standard processes, e.g., by steam or air blowing, flame blowing and mechanical pulling. Specifically, such filaments can be made employing mechanical pulling. A fiber diameter of from 9 to 20 micrometers, specifically 10 to 15 micrometers, is used. In preparing the molding compositions, it is convenient to use the fiber in the form of chopped strands of from about 1/8 inch (3 mm) to about 1/2 inch (13 mm) in length, although roving may also be used. In articles molded from the compositions, the fiber length is typically shorter presumably due to fiber fragmentation during compounding of the composition. The length of such short glass fibers present in final molded compositions can be less than about 4 mm.

The fibers can be treated with a variety of coupling agents to improve adhesion to the resin matrix. Examples of coupling agents include alkoxy silanes and alkoxy zirconates, amino, epoxy, amide or mercapto functionalized silanes. Organometallic coupling agents, for example, titanium- or zirconium-based organometallic compounds, can also be used. Sizing-coated glass fibers are commercially available from Owens Corning Fiberglass as, for example, OCF K filament glass fiber 183F.

The glass fibers can be blended first with the polyester composition and then fed to an extruder and the extrudate cut into pellets, or, in a specific embodiment, they may be separately fed to the feed hopper of an extruder. In one embodiment, the glass fibers can be fed downstream in the extruder to minimize attrition of the glass. Generally, for preparing pellets of the polyester composition used herein, the extruder can be maintained at a temperature of approximately 480°F to 550°F. The pellets so prepared when cutting the extrudate can be 0.635 cm long or less. As stated previously, such pellets contain finely divided uniformly dispersed glass fibers in the composition. The dispersed glass fibers are reduced in length as a result of the shearing action on the chopped glass strands in the extruder barrel.

The glass fiber is present in the polyester composition in an amount from 10 to 30 wt.%, more specifically from 10 to 20 wt.% by weight.

In still other embodiments, the compositions can optionally comprise a particulate (non-fibrous) organic filler, which can impart additional beneficial properties to the compositions such as thermal stability, increased density, stiffness, and/or texture. Exemplary particulate fillers are alumina, amorphous silica, alumino silicates, mica, clay, talc, glass microspheres, and metal oxides such as titanium dioxide, zinc sulfide, ground quartz, and the like. When present, the particulate filler is used in an amount from more than zero to 3 wt.%, specifically more than 0 to 2 wt.%, more specifically from 0.1 to 1 wt.%.

The thermoplastic polyester composition can optionally further comprise any of the additives and property modifiers that polyesters are usually combined with, with the proviso that the additives are selected so as to not significantly adversely affect the desired properties of the composition, for example, surface gloss. Exemplary additives include, for example, antioxidants, flame retardants, heat stabilizers, light stabilizers, antistatic agents, colorants, mold release agents, and other additives for the purpose of imparting desired properties corresponding to the product being made. As used herein, a "stabilizer" is inclusive of an antioxidant, a thermal stabilizer, radiation stabilizer, ultraviolet light absorbing additive, and the like, and combinations thereof. In one embodiment, both an antioxidant and further stabilizer is used, including a plurality of antioxidants or an antioxidant and a thermal stabilizer. In an embodiment, the combination of additives is present in an amount of 0 to 5 wt.%, based on 100 parts by weight of the combination of the polybutylene terephthalate, glass fibers and polyethylene terephthalate. For example, the composition comprises 0 to 5 wt.% of a combination comprising at least one of a colorant, an antioxidant, a mold release agent, a stabilizer, or a combination thereof, based on 100 parts by weight of the combination of the polybutylene terephthalate, glass fibers and polyethylene terephthalate.

For example, the thermoplastic composition can optionally further comprises inorganic phosphorus compounds as stabilizers. These inorganic phosphorus compounds can be inorganic compounds selected from phosphoric acid, phosphorous acid, and metal salts of phosphoric acid and phosphorous acid; specifically, metal salts of phosphoric acid, such as zinc phosphate, potassium phosphate, sodium phosphate, aluminum phosphate, sodium pyrophosphate, etc., and their hydrates, and the corresponding metal phosphates, can be listed as metal salts of phosphoric acid and phosphorous acid. Such inorganic phosphorus compounds are generally used in amounts of 0.05 to 0.5 parts by weight, based on the total weight of the composition.

Antioxidants can also include a hindered diol stabilizer, a thioester stabilizer, an amine stabilizer, a phosphite stabilizer, a phosphonite stabilizer, or a combination comprising at least one of the foregoing types of stabilizers. In one embodiment, the polyester composition comprises from 0.01 to 0.50 wt.% of antioxidant selected from the group consisting of phosphites, phosphonites, and combinations thereof. More specifically, the polyester composition can comprise antioxidant selected from the group consisting of alky aryl phosphite, alkyl aryl phosphonites, and combinations thereof.

Such antioxidants specifically include organophosphites such as tris(2,6-di-tert-butylphenyl)phosphite, tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, commercially available from BASF Company as IRGANOX 1010; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate, pentaerythrityl-tetrakis(beta-lauryl thiopropionate) (available under the trade name SEENOX 412S), or the like; amides of beta-(3,5-di-tert-butyl-4-hydroxyphenyl)-propionic acid or the like; or combinations comprising at least one of the foregoing antioxidants.

One exemplary antioxidant composition comprises tetrakis(2,4-di-tert-butylphenyl) 4,4'-biphenylene diphosphonite, which is available under the trade name SANDOSTAB® P-EPQ, from Clariant. The antioxidant composition can also consist essentially of, or consist of, tetrakis[methylene(3,5-di-tert-butyl-4-hydroxyhydrocinnamate) ] methane.

When present, the antioxidants are be used in an amount of 0.0001 wt.% to 2 wt.%, more specifically 0.01 wt.% to 0.5 wt.%, based on the total weight of the thermoplastic polyester composition.

A wide variety of mold release agents can be used, for example phthalic acid esters such as dioctyl-4,5-epoxy-hexahydrophthalate; tristearin; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; and waxes such as beeswax, paraffin wax, or the like. In one embodiment, the mold release agent is a salt or an ester of one or more long chain, aliphatic carboxylic acids having from 12 to 36 carbon atoms. Such materials are generally used in amounts of 0.1 to 0.5 parts by weight, based on the total weight of the composition.

In one embodiment, the polyester composition further comprises from 0.1 to 1.0 wt.% of a mold release agent selected from the group consisting of aliphatic polyesters, poly-alpha-olefins, aliphatic polyamides, carboxylic acid salts, and combinations thereof.

Suitable colorants for hollow molded article can include those known for use in molding compositions, including inorganic and organic pigments and dyes. Exemplary colorants include metal oxides and oxide-hydroxides, mixed metal oxides, titanates, aluminates, carbonates, iron oxides, chromium oxides, ultramarines and metal sulfides, sulfoselenides, rare-earth sulfides, chromium iron oxides, chromium iron nickel spinel, chromium green, black hematite, bismuth vanadate, chromates, nitrides (including, but not limited to tantalum), iron blue, cobalt and manganese phosphates, europium complexes, and carbon black. Organic colorants include azo dyes, methine dyes, coumarins, pyrazolones, quinophthalones, quinacridones, perinones, anthraquinones, phthalocyanines, perylene derivatives, anthracene derivatives, indigoid and thioindigoid derivatives, imidazole derivatives, napthalimide derivatives, xanthenes, thioxanthenes, azine dyes, polyazaindacenes, benzoxazole, pyrazolines, fluoroscein, benzothiazole, hydroxyflavones, bis(hydroxyflavones), stilbenes, thiophene, rhodamines, and all their derivatives.

In one embodiment, the hollow molded article of the present invention also includes 0.1 to 5 wt.% of a colorant, based on 100 parts by weight of the combination of the polybutylene terephthalate, glass fiber and polyethylene terephthalate. Specifically, where the article is to be black, the composition can contain carbon black, or other black colorants known in the art. More specifically, the composition can contain carbon black having a particle size of 10 to 25 nm. Where the article is to be white, the composition can contain zinc sulfide or other white colorants known in the art. Where the article is to be gray, the composition can contain colorants known in the art to impart a gray color, more specifically a combination of carbon black and zinc sulfide.

With the proviso that surface properties and mechanical properties are not significantly adversely affected, the compositions can optionally further comprise still other conventional additives used in polyester polymer compositions such as plasticizers, quenchers, lubricants, antistatic agents, processing aids, laser marking additives, and the like. A combination comprising one or more of the foregoing or other additives can be used.

For making the hollow molded articles, the thermoplastic polyester compositions can be prepared by blending the components of the composition, employing a number of procedures. In an exemplary process, the polyester component, reinforcing glass fiber, and stabilizer are placed into an extrusion compounder to produce molding pellets or the like. The components are dispersed in a matrix in the process. Preferably, all of the components are freed from as much water as possible, frequently by the use of vacuum venting during extrusion. In addition, compounding is carried out to ensure that the residence time in the machine is short; the temperature is carefully controlled; the friction heat is utilized; and an intimate blend between the components is obtained.

For example, after pre-drying the polyester composition (e.g., for four hours at 120°C), a single screw extruder can be fed with a dry blend of ingredients, in which the screw employed having a long transition section to ensure proper melting. Alternatively, a twin-screw extruder with intermeshing co-rotating screws can be fed with resin and additives at the feed port and reinforcing additives (and other additives) can be fed downstream. In either case, a melt temperature of 230°C to 300°C can be used in one embodiment. The pre-compounded composition can be extruded and cut up into molding compounds such as conventional granules, pellets, and the like by standard techniques. The pre-compounded composition can be molded by injection molding techniques. Specifically, the polyester composition can be molded in equipment adapted for gas-assisted molding.

In one embodiment, the method of making the hollow molded articles comprises mixing the components of the polyester composition, introducing the polyester composition as a molten material into a molding apparatus adapted for gas-assisted molding and then, at the end of the filling stage, introducing a gas such as nitrogen into the still liquid core of the molding in the molding cavity to hollow the article. The gas in such a process follows the path of least resistance and can replace a thick molten section with a gas-filled channel. Gas pressure can pack the molten polyester composition against the relatively cold mold cavity surface. Subsequently, the gas can be vented from the molding apparatus, either to the atmosphere or recycled. After a preselected period of time, the solid molded hollow article that has been formed can be removed from molding apparatus. In one embodiment, the gas-assisted injection molding can be molded at a melt temperature of 260 to 290°C.

Thus, a hollow molded article of a one-piece construction can be integrally molded or formed from a the thermoplastic polyester composition by conventional injection molding equipment having an article-defining cavity and an injection aperture wherein the molten polyester composition is injected and an injection aperture wherein pressurized fluid, specifically a gas, such as air, dehumidified air, nitrogen or argon, is communicated to the molten polyester composition in the article defining cavity to at least partially distribute the molten resin, expanding the polymeric melt and replicating the surface and shape of the mold. The molten polyester composition is then is then cooled to a solid. A hollow core can be formed by the pressurized fluid that is defined by the gas channel that can extends at least partially through a hollow body section of the article. In a specific embodiment, the gas channel extends completely through the hollow body of the article.

The hollow articles made according to this invention have various application, including consumer goods, office equipment, computers, office equipment, electronic or communication devices, automotive parts, domestic or industrial machine tools, lawn equipment, and especially domestic appliances. The term "automotive" refers to applications with respect to any vehicle of transportation, for example cars, trucks, motor bicycles, boats, and sport vehicles. For example, hollow molded articles can be used in luggage racks or spoilers, in which lighter weight is an advantage.

As indicated above, the term "appliances" refers to machines such as ovens, fridges, and other kitchen appliances. In one advantageous application, the hollow molded article can be used as a handle for an appliance, luggage, a door, or the like, in which substantially at least the visible outer surface of the handle can have a gloss of more than 75 gloss units. A method of using such hollow molded articles, in the form of an integrally formed handle that is permanently attached to an apparatus, therefore, comprises a person manually grasping the handle and thereby moving the apparatus or a moveable part thereof. Specifically, such a handle can be attached to a home appliance, for example, the door of an oven or refrigerator. In one embodiment, the hollow molded article is 1.27 to 15.24 cm wide, 15.24 to 101.6 cm long, and has a wall thickness 0.127 to 1.016 cm.

At least 10 % of the surface area of the hollow molded article can have a glossy surface, which can form a continuous glossy region having a gloss of at least 75 gloss with a gloss variation from the average of less than 10 gloss units in the glossy region. Specifically at least 30%, more specifically at least 40%, of the surface area of the hollow area can have such a glossy surface. A portion of the surface of the hollow article can optionally be non-glossy or textured. For example, in the case of a handle, the backside of the handle opposite to the visible glossy region can be textured for ease of grasping or pulling. Such textured surfaces can be formed by the cavity surface of the tool used for molding.

As described above, the hollow molded articles of the present invention are extremely excellent in terms of surface gloss and, more specifically, (i) a gloss (ASTM D523) that is at least 80 gloss units, as measured at 60 degrees, and (ii) a gloss that from the average less than 7.5 gloss units in the glossy region, more specifically less than 6 percent, and (iii) the absence of surface defects visible to the eye on a surface thereof. Furthermore, a molded sample (or pellets in the case of MVR) of the polyester compositions used to make the hollow molded articles can meet certain minimum targeted performance properties with respect to a menu of properties comprising (i) a melt viscosity (MVR), as measured by ASTM D1238, at 265 °C for 360 seconds using a 5 kg weight after equilibrating for 360 sec, of from 30 to 60 cm³/10 min, and after equilibrating for 1080 sec, of from 40 to 90 cm³/10 min, (ii) a heat deflection temperature of greater than 200°C at 66 psi (0.455 MPa) as measured by ASTM D648, and (iii) an Izod notched impact strength of at least 40 J/m, in accordance with ASTM D246.

In terms of uniformity of gloss, the variation is measured, as in the Examples herein, by measuring the interior of glossy region at each of six equally spaced adjacent locations within the boundary of the glossy region, between end points, specifically from the direction of the end gate of the article, specifically in the longitudinal direction of the glossy region, calculating the average gloss, and then taking the standard deviation. Measurement of gloss can be obtained with a standard Tri-Gloss meter. In one embodiment, the glossy region has a length of at least 12 cm, specifically at least 18 cm, more specifically at least 20 cm.

In one embodiment, the hollow molded article made from a polyester composition can exhibit a gloss (ASTM D 523) that is at least 85 gloss units, as measured at 60 degree, and can exhibit a gloss that varies from the average less than 6 gloss units. In addition, the article can be made with no surface defects in the glossy region that visible to the eye.

In another embodiment, the hollow molded article is made by a gas-assisted injection-molded article using a polymer composition and has (i) a gloss (ASTM D 523) that is at least 80 gloss units, as measured at 60 degrees, and (ii) a gloss that varies from the average less than 7.5 gloss units, wherein a molded sample of the polyester composition used to make the hollow molded article simultaneously exhibits the following properties: (i) a melt viscosity (MVR), as measured by ASTM D1238, at 265 °C for 360 seconds using a 5 kg weight after equilibrating for 360 sec, of from 30 to 60 cm³/10 min, and at 265 °C, using a 5 kg weight after equilibrating for 1080 sec, of from 40 to 90 cm³/10 min (ii) a heat deflection temperature of greater than 200°C at 66 psi (0.455 MPa), and (iii) an Izod notched impact strength of greater than 40 J/m, in accordance with ASTM D246.

In a specific embodiment, a hollow molded article comprises a surface of which at least a portion is a glossy surface, which is integrally molded from a thermoplastic polyester composition, wherein the composition comprises 28 to 50 wt.%, specifically 35 to 45 wt.%, of polybutylene terephthalate with a melting point of 210 to 230°C, optionally 0.5 to 0.9 dl/g, wherein deciliters per gram is measured in a 60:40 by weight phenol/1,1,2,2-tetrachloroethane combination at 23°C. The composition further comprises 10 to 30 wt.%, or 10 to 20 wt%, of a plurality of glass fibers having a diameter of 9 to 20 micrometers, specifically 9 to 15 micrometers, and optionally having a length of 0.01 to 1.0 mm. The composition further comprises 20 to 62 wt.% of polyethylene terephthalate with a melting point of 240 to 260°C and a diethylene glycol group content of 0.5 to 2.5 wt.%, optionally wherein the polyethylene terephthalate has an intrinsic viscosity of 0.50 to 1.10 dl/g measured in a 60:40 by weight phenol/1,1,2,2-tetrachloroethane combination at 23°C. Optionally, the ratio of polybutylene terephthalate to polyethylene terephthalate in the polyester composition is from 0.50 to 1.20. Optionally, the polyester composition further comprises from 0.1 to 10 weight percent, based on the total weight of the polymers in the composition, of another polyester, for example polyethylene naphthalate, polybutylene naphthalate, polytrimethylene terephthalate, poly(1,4-cyclohexylenedimethylene 1,4-cyclohexanedicarboxylate), poly(1,4-cyclohexylenedimethylene terephthalate), poly(cyclohexylenedimethylene-co-ethylene terephthalate), or a combination thereof. The composition further comprises 0 to 5 wt.%, specifically 0 to 2.5 wt%, of a combination of at least one of a colorant, an antioxidant, a mold release agent, or a stabilizer based on 100 parts by weight of the combination of the polybutylene terephthalate, glass fibers and polyethylene terephthalate. For example, the polyester composition further comprises from 0.01 to 0.50 wt.% of antioxidant selected from phosphites, phosphonites, and combinations thereof; from 0.1 to 1.0 wt.% of a mold release agent selected from aliphatic polyesters, poly alpha olefins, aliphatic polyamides, carboxylic acid salts, and combinations thereof; 0.1 to 5 wt.% of a colorant selected from the group consisting of carbon black (which can have a particle size of 10 to 25 nm), zinc sulfide, and a combination thereof; wherein each of the foregoing is based on 100 parts by weight of a combination of the polybutylene terephthalate, glass fiber and polyethylene terephthalate. In any of the foregoing embodiments, the polyester composition, in the form of pellets, has an MVR, as measured by ASTM D1238, at 265 °C for 360 seconds using a 5 kg weight after equilibrating for 360 sec, of from 30 to 60 cm³/10 min and, after equilibrating for 1080 sec, of from 40 to 90 cm³/10 min. Optionally, a molded sample of the polyester composition exhibits a heat deflection temperature of at least 200°C at 66 psi (0.455 MPa) as measured by ASTM D648, and/or a molded sample of the polyester composition exhibits an Izod notched impact strength of at least 40 J/m, as measured by ASTM D256.

In any of the foregoing embodiments, at least 10 % of the surface of the article has a continuous glossy surface that forms a continuous glossy region having a gloss of at least 75 gloss units, as measured at 60 degrees in accordance with ASTM D523; and the gloss varies from the average less than 10 gloss units in the glossy region.

In any of the foregoing embodiments, the article is a handle for a large appliance, and wherein at least 30% of the outer surface of the handle has a continuous glossy region with a gloss of at least 75 gloss units, as measured at 60 degrees in accordance with ASTM D523; and wherein the gloss varies from the average less than 10 gloss units in the glossy region; at least a portion of the outer surface of the handle has a non-glossy or textured surface.

In another embodiment, A hollow molded article, for example a handle for a large appliance, comprises a surface of which at least a portion is a glossy surface, which is integrally molded from a thermoplastic polyester composition comprising 35 to 45 wt.% polybutylene terephthalate with a melting point of 210 to 230°C; 10 to 20 wt.% of a plurality of glass fibers having a diameter of 9 to 15 micrometers; 30 to 54.9 wt.% polyethylene terephthalate with a melting point of 240 to 260°C and a diethylene glycol group content of 0.5 to 2.5 wt.%, optionally wherein the ratio of polybutylene terephthalate to polyethylene terephthalate in the polyester composition is from 0.50 to 1.20; 0.1 to 5 wt.% of a colorant, based on 100 parts by weight of the combination of the polybutylene terephthalate, glass fiber and polyethylene terephthalate; and 0 to 5 wt.% of a combination comprising at least one of an antioxidant, a mold release agent, a stabilizer, or a combination thereof, based on 100 parts by weight of the combination of the polybutylene terephthalate, glass fibers and polyethylene terephthalate; wherein at least 10 % of the surface area of the article has a glossy surface, which forms a continuous glossy region having a gloss of at least 80 gloss units, as measured at 60 degrees in accordance with ASTM D523, and wherein gloss varies from the average less than 10 gloss units in the glossy region. When the article is a handle, at least 30% of the outer surface of the handle can have a continuous glossy region with a gloss of at least 75 gloss units, as measured at 60 degrees in accordance with ASTM D523; and wherein the gloss varies from the average less than 10 gloss units in the glossy region, and at least a portion of the outer surface of the article can have a non-glossy or textured surface.

In still another embodiment, A hollow molded article, for example a handle for a large appliance, comprises an outer surface of which at least a portion is a glossy surface, which is integrally molded from a thermoplastic polyester composition comprising 28 to 50 wt.% polybutylene terephthalate with a melting point of 210 to 230°C, 10 to 30 wt.% of a plurality of glass fibers having a diameter of 9 to 20 micrometers, 20 to 62 wt.% polyethylene terephthalate with a melting point of 240 to 260°C and a diethylene glycol group content of 0.5 to 2.5 wt.%, and 0 to 5 wt.% of a combination comprising at least one of a colorant, an antioxidant, a mold release agent, a stabilizer based on 100 parts by weight of the combination of the polybutylene terephthalate, glass fiber and polyethylene terephthalate; wherein at least 10 %, specifically at least 30%, of the outer surface area of the article has a glossy surface, which forms a continuous glossy region having a gloss of at least 75 gloss units, as measured at 60 degrees in accordance with ASTM D523, wherein the gloss varies from the average less than 10 gloss units in the glossy region; and the article is formed by a gas-assisted injection molding process.

In any of the foregoing embodiments, a method of forming the hollow molded article, for example a handle for a large appliance, comprises mixing the components of the polyester composition; introducing the polyester composition as a molten material into a molding apparatus adapted for gas-assisted injection molding; introducing a gas into the molding apparatus to hollow the molten material by producing a gas channel at least partially through the molten material, expanding the molten material and replicating the surface and shape of the mold; cooling the molten material so that it is a solid; and removing the solid hollow molded article that has been formed from the molding apparatus. Gas-assisted injection molding at a melt temperature of 260 to 290°C can be used.

The invention is further illustrated by the following non-limiting examples, in which all parts are by weight unless otherwise stated.

### EXAMPLES

### Materials

The following materials are used in Examples 1 to 2 and Comparative Examples A to F. Table 1 shows the nomenclature used as well as a description. PBT polymers were obtained from SABIC INNOVATIVE PLASTICS.

**Table 1**

| Raw Materials | Description |
|---|---|
| PBT 195 | Poly(1,4-butylene terephthalate), intrinsic viscosity (IV) = 0.66 dl/g, Mw (weight-average molecular weight) = 53400 g/mol, Tm = 215 °C |
| PBT 315 | Poly(1,4-butylene terephthalate), intrinsic viscosity (IV) = 1.10 dl/g, Mw (weight-average molecular weight) = 110000 g/mol, Tm = 217 °C |
| Low IV PET | 0.535 dl/g IV PET, 0.8% DEG, Tₘ 257 °C |
| High IV PET | 0.83 dl/g IV PET, 0.8% DEG, Tₘ 242 °C |
| Glass Fiber | Owens Corning 183F, 13 micrometer diameter E glass |
| Mold Release | Pentaerythritol tetrastearate (PETS) |
| Antioxidant 1 | PEPQ phosphonite from Clariant |
| Antioxidant 2 | Diphenyl isodecyl phosphite |
| Carbon black | 25 wt% 17 nm particle size carbon black in PBT 195 |
| Silica | Precipitated amorphous silica (process aid) |

### General Testing Techniques and Procedures:

Gloss was measured per ASTM D523 at six different locations in a glossy region, at equally spaced distances apart between two end points, starting from the direction of the gate end of the part. Specifically, for the molded handle in the examples, gloss was measured per ASTM D523 at six different locations on the topside of the molded handle approximately 1.5 inches (3.8 cm) apart starting from the gate end of the part. An average gloss was calculated. The gloss variation is taken as the standard deviation based on the gloss measurements.

Melt viscosity (MVR) was measured as per ASTM D1238 at 265 °C using a 5 kg weight, on pellets dried for at least 2 hr at 125 °C. the melt was allowed to equilibrate for 6 (360 sec.) or 18 (1080 sec.) minutes.

Differential Scanning Calorimetry (DSC) data was measured on pellets using a 20 °C heating rate. Onset melting, heat of fusion/melting, onset crystallization temperature (Tc), heat of crystallization (delta Hc), and peak melting temperature, were determined by DSC in a fashion similar to ASTM D3418.

Notched Izod testing was performed on 75 mm x 12.5 mm x 3.2 mm bars in accordance with ASTM D256 using a 5 lb hammer.

The heat distortion temperature (HDT) test was performed by placing HDT samples at load of 0.45 MPa (66 psi) and heating rate of 120°C/hr.

### Extrusion/Molding Procedures

The components as shown in Table 1 (amounts expressed in percent weight, based on the total weight of the polymer composition) are blended together in a drum tumbler and then extruded on a 44-mm twin-screw extruder with a vacuum vented mixing screw, at a barrel temperature set at 250°C and a screw speed of 200 rpm and throughput rate of 100 kg per hour. The extruded pellets are dried at 120°C for at least two hours before injection molding.

The sample articles for testing were molded from the sample polyester compositions in an gas-assisted injection molding apparatus the corresponding polyester composition was injected into the mold at a 260 to 290 °C melt temperature. Subsequently, nitrogen gas was injected into the mold to produce a gas channel through the molten material. Gas assist molding was done on a 350 ton Sumitomo molding machine with 100 rpm screw speed , a mold temperature of about 93 °C, a 2 to 5 sec. injection time, 15 to 20 sec. pack time, a 20 to 40 sec. cooling time and a 40 to 60 sec. cycle time. Injection pressure was about 3.103 MPa to 4.482 MPa.

The part molded was a hollow handle approximately 38.1 cm long, 2.54 cm wide, and 5.08 cm high. The upper exterior surface was about 27.94 cm long, about 2.54 cm wide, with a smooth glossy finished topside. The underside of the part, which was about 1.905 cm below the topside, was a textured finger grip surface. The ends of the part were tapered triangular shapes about 5.08 cm long ending in a flat base for attachment to a door.

### EXAMPLES 1-2 and COMPARATIVE EXAMPLES A-F

The purpose of Examples 1-2 is to make a glass-filled polyester composition containing various ratios of PET and PBT and evaluate their performance with regard to the gloss and other relevant properties. Thus, the compositions were evaluated to determine their performance properties with respect to a menu of properties, with particular attention to meeting minimum requirements in terms of the specified gloss.

The purpose of Comparative Examples A to F (CExA-CExF) was to compare the performance properties of the compositions of Examples 1-2 with a polyester composition containing no PBT (CEx E and CExF) or that contains a relatively high ratio (Comparative Example A and B) or that contains a relatively lower ratio in various amounts (Comparative Examples C and D). Formulations and Results are shown in Table 2.

**Table 2**

| Component | Units | CExA | CExB | CExC | CExD | CExE | CExF | Ex. 1 | Ex. 2 |
|---|---|---|---|---|---|---|---|---|---|
| PBT 315, high Mw | wt.% | 39.8 | 32.1 | 7.7 | 7.7 | 0 | 0 | 23 | 23 |
| PBT 195, low Mw | wt.% | 27.55 | 20.25 | 4.65 | 4.65 | 0 | 0 | 14.35 | 14.35 |
| Low IV PET | wt.% | 15 | 30 | 70 | 0 | 82.35 | 0 | 45 | 0 |
| High IV PET | wt.% | 0 | 0 | 0 | 70 | 0 | 82.35 | 0 | 45 |
| Fiber Glass | wt.% | 15 | 15 | 15 | 15 | 15 | 15 | 15 | 15 |
| Mold release agent | wt.% | 0.1 | 0.1 | 0.1 | 0.1 | 0.1 | 0.1 | 0.1 | 0.1 |
| Silica | wt.% | 0.2 | 0.2 | 0.2 | 0.2 | 0.2 | 0.2 | 0.2 | 0.2 |
| Antioxidant 1 | wt.% | 0.05 | 0.05 | 0.05 | 0.05 | 0.05 | 0.05 | 0.05 | 0.05 |
| Antioxidant 2 | wt.% | 0.3 | 0.3 | 0.3 | 0.3 | 0.3 | 0.3 | 0.3 | 0.3 |
| Carbon black | wt.% | 2.0 | 2.0 | 2.0 | 2.0 | 2.0 | 2.0 | 2.0 | 2.0 |
| PBT/PET ratio | 4.6 | 4.6 | 1.8 | 0.20 | 0.20 | 0.018 | 0.018 | 0.86 | 0.86 |
| Properties | Units | CExA | CExB | CExC | CExD | CExE | CExF | Ex. 1 | Ex. 2 |
| Part length with surface glass (defects) showing | cm | 15 | 9 | 15 | 15 | 15 | 15 | 0 | 0 |
| Defects showing on surface | NA | yes | yes | yes | yes | yes | yes | no | no |
| Article zone 1 60 degree gloss | gloss | 20 | 26 | 23 | 19 | 24 | 10 | 88 | 88 |
| Article zone 2 60 degree gloss | gloss | 28 | 48 | 32 | 30 | 56 | 13 | 84 | 89 |
| Article zone 3 60 degree gloss | gloss | 33 | 88 | 40 | 25 | 47 | 15 | 91 | 91 |
| Article zone 4 60 degree gloss | gloss | 57 | 83 | 35 | 19 | 47 | 13 | 92 | 95 |
| Article zone 5 60 degree gloss | gloss | 60 | 71 | 30 | 25 | 43 | 10 | 85 | 88 |
| Article zone 6 60 degree gloss | gloss | 62 | 79 | 18 | 18 | 24 | 10 | 85 | 80 |
| Avg. 60 degree gloss | gloss | 43 | 66 | 30 | 23 | 40 | 12 | 88 | 89 |
| Standard deviation | gloss | 18 | 24 | 8 | 5 | 13 | 2 | 3 | 5 |
| Onset melting temp. | °C | NA* | NA | 258.8 | 248.9 | 256.7 | 258.2 | 247.9 | 257.1 |
| Heat of fusion/melting | J/g | NA | NA | 41.6 | 33.7 | 46.2 | 39.6 | 43.3 | 29.0 |
| Onset crystallization Temp (T_{c}) | °C | NA | NA | 206.1 | 185.5 | 207.7 | 207.2 | 185.8 | 203.6 |
| Heat of crystallization (delta H_{c}) | J/g | NA | NA | -33.9 | -28.7 | -45.8 | -38.7 | -39.7 | -47.3 |
| Peak melting temp. (Tₘ) | °C | NA | NA | 254.6 | 246.8 | 253.7 | 255.4 | 244.5 | 252.8 |
| Tₘ-T_{c} | °C | NA | NA | 52.7 | 63.4 | 49.0 | 51.0 | 62.1 | 53.5 |
| MVR at 265°C, 5 Kg, 360 s | cm³/10 min | 51.7 | 49.1 | 49.7 | 33.0 | 117.0 | 33.0 | 51.9 | 36.7 |
| MVR at 265°C, 5 Kg, 1080s | cm³/10 min | NA | NA | 92.6 | 49.7 | 136.0 | 42.8 | 72.0 | 48.7 |

| | | | | | | | | | |
|---|---|---|---|---|---|---|---|---|---|
| *NA = Not available | | | | | | | | | |

The results shown in Table 2 indicate that it is possible to make a glass-filled polyester composition having high gloss by selecting a specified ratio of PBT and PET, specifically wherein the article further exhibits a gloss that is more than 75 gloss units, as measured at 60 degrees, which gloss varies from the average less than 10 gloss units in the glossy region, when based on six equally spaced locations in the glossy region. The variation is represented by the standard deviation in Table 2.

The compositions of Comparative Examples A-F do not meet these properties. It can be seen that for Examples E and F in Table 3, when no PBT is present in the formulations, at a glass fiber content is 15 wt.%, defects showed on the surface and the 60 degree gloss was on average 40 and 12 gloss units, respectively, for Comparative Examples E and F. Example E with the low IV PET showed better gloss than Example F with high IV PET, but neither performed as well as Example 1 and 2 with either low IV PET or High IV PET in combination with PBT.

Surprisingly, it can be seen that for Examples A and B in Table 3, when a relatively high ratio of PBT to PET was present in the formulation, 4.6 and 1.8, respectively, surface defects still occurred and, while the average 60 degree gloss improved to 43 and 66 gloss units, respectively, the performance was still below that of Examples 1 and 2, in which the ratio of PBT to PET was 0.86. Similarly, it can be seen that for Examples C and D in Table 3, when a relatively low ratio of PBT to PET was present in the formulation, specifically a ratio of 0.20, then surface defects again occurred and the average 60 degree gloss declined still further below that of Comparative Examples A and B, to 30 and 23 gloss units, respectively. The variation in gloss, as indicated by standard deviation, however, was improved over Comparative Examples A and B. Thus, inventive Examples 1 and 2 was unexpectedly found to show a so-called sweet spot in terms of both high gloss and low variation in gloss.

The data in Table 3 further showed that the improvement in gloss and variation in gloss was not at the expense of poor heat stability or impact strength, while melt viscosity was remained acceptable. In particular, comparing the 6 and 18 minute MVR at 265°C, for examples 1 and 2 showed less than a 40% MVR change under these abusive conditions: increasing from 51.9 to 72.0 cm3/10 min and from 36.7 to 48/7 cm3/10 min. respectively. The Izod notched impact strength (5 lb hammer) was 43.7 J/m.

All patents and applications cited herein are incorporated by references. While the invention has been described with reference to specific embodiments, various changes can be made and equivalents can be substituted for elements thereof without departing from the scope of the description, and modifications can be made to adapt a particular situation or material to the teachings herein without departing from essential scope thereof. Thus the invention not be limited to the particular embodiment disclosed as the best mode, but includes all embodiments falling within the scope of the appended claims.

## Claims

1. A hollow molded article, comprising a surface of which at least a portion is a glossy surface, which is integrally molded from a thermoplastic polyester composition,
(a) wherein the composition comprises:
28 to 50 wt.% of a polybutylene terephthalate having a melting point of 210 to 230°C as measured according to ASTM D3418 and as disclosed in the description
10 to 30 wt.% of a plurality of glass fibers having a diameter of 9 to 20 micrometers,
20 to 62 wt.% of a polyethylene terephthalate having a melting point of 240 to 260°C, as measured according to ASTM D34 18 and as disclosed in the description, and a diethylene glycol group content of 0.5 to 2.5 wt.%, and
0 to 5 wt.% of a combination comprising at least one of a colorant, an antioxidant, a mold release agent, a stabilizer, or a combination thereof, based on 100 parts by weight of the combination of the polybutylene terephthalate, glass fibers and polyethylene terephthalate;
(b) wherein at least 10 % of the surface of the article has a continuous glossy surface which forms a continuous glossy region having a gloss of at least 75 gloss units, as measured at 60 degrees in accordance with ASTM D523; and
(c) wherein the gloss varies from the average gloss less than 10 gloss units in the glossy region, as determined by measuring the interior of the glossy region at each of six equally spaced adjacent locations within the boundary of the glossy region, from the end gate of the article in the longitudinal direction of the glossy region, calculating the average gloss, and then taking the standard deviation.

2. The hollow molded article of claim 1, wherein the ratio of polybutylene terephthalate to polyethylene terephthalate in the polyester composition is from 0.50 to 1.20.

3. The hollow molded article of any one of claims 1-2, wherein the polyethylene terephthalate has an intrinsic viscosity of 0.50 to 1.10 dl/g and the polybutylene terephthalate has an intrinsic viscosity of 0.5 to 0.9 dl/g, wherein deciliters per gram is measured in a 60:40 by weight phenol/1,1,2,2-tetrachloroethane combination at 23°C.

4. The hollow molded article of any one of claims 1-3, wherein the polyester composition further comprises from 0.1 to 10 weight percent, based on the total weight of the polymers in the composition, of an additional polyester that is polyethylene naphthalate, polybutylene naphthalate, polytrimethylene terephthalate, poly(1,4-cyclohexylenedimethylene 1,4-cyclohexanedicarboxylate), poly(1,4-cyclohexylenedimethylene terephthalate), poly(cyclohexylenedimethylene-co-ethylene terephthalate), or a combination comprising at least one of the foregoing polyesters.

5. The hollow molded article of any one of claims 1-4, wherein the glass fiber has a length of 0.01 to 1.0 mm.

6. The hollow molded article of any one of claims 1-5, wherein the polyester composition further comprises at least one of
0.01 to 0.50 wt.% of antioxidant that is a phosphites, phosphonites, and combinations thereof;
0.1 to 1.0 wt.% of a mold release selected from the group consisting of: aliphatic polyesters, poly alpha olefins, aliphatic polyamides, carboxylic acid salts, and combinations thereof; and
0.1 to 5 wt.% of a colorant that is carbon black, optionally having a particle size of 10 to 25 nm, zinc sulfide, and a combination thereof.

7. The hollow molded article of any one of claims 1-6, wherein thermoplastic polyester composition further comprises:
35 to 45 wt.% polybutylene terephthalate having a melting point of 210 to 230°C; and
10 to 20 wt.% of a plurality of glass fibers having a diameter of 9 to 15 micrometers.

8. The hollow molded article of any one of claims 1-7, wherein the polyester composition, in the form of pellets, has a melt viscosity, as measured by ASTM D1238, at 265 °C for 360 seconds using a 5 kg weight after equilibrating for 360 sec, of from 30 to 60 cm³/10 min and, after equilibrating for 1080 sec, of from 40 to 90 cm³/10 min, a molded sample of the polyester composition exhibits a heat deflection temperature of at least 200°C at 0.455 MPa as measured by ASTM D648, or a combination thereof.

9. The hollow molded article of any one of claims 1-8, wherein the article is a handle for a large appliance.

10. The hollow molded article of claim 9, wherein a molded sample of the polyester composition exhibits an Izod notched impact strength of at least 40 J/m, as measured by ASTM D256.

11. The hollow molded article of claim 9, wherein at least a portion of the outer surface of the article has a non-glossy or textured surface.

12. A method of forming the hollow molded article of any one of claims 1-11, which method comprises
mixing the components of the polyester composition;
introducing the polyester composition as a molten material into a molding apparatus adapted for gas-assisted injection molding;
introducing a gas into the molding apparatus to hollow the molten material by producing a gas channel at least partially through the molten material, expanding the molten material and replicating the surface and shape of the mold;
cooling the molten material so that it is a solid; and
removing the solid hollow molded article formed from the molding apparatus.

13. The method of claim 12 wherein the hollow molded article is obtained by gas-assisted injection molding at a melt temperature of 260 to 290°C.

14. A method of using the hollow molded article of any one of claims 1-13 wherein the article forms a handle that is permanently attached to an apparatus, the method comprising grasping the handle; and moving the apparatus or a movable portion thereof.

15. The method of claim 14 wherein the handle is attached to a large appliance.

## Patentansprüche

1. Ein geformter Hohlkörper, umfassend eine Oberfläche, von der wenigstens ein Teil eine glänzende Oberfläche ist, die aus einer thermoplastischen Polyesterzusammensetzung integral geformt ist,
(a) wobei die Zusammensetzung umfasst:
28 bis 50 Gew.-% eines Polybutylenterephthalats mit einem Schmelzpunkt von 210 bis 230 °C, wie gemäß ASTM D3418 gemessen und in der Beschreibung offenbart ist,
10 bis 30 Gew.-% einer Vielzahl von Glasfasern mit einem Durchmesser von 9 bis 20 Mikrometern,
20 bis 62 Gew.-% eines Polyethylenterephthalats mit einem Schmelzpunkt von 240 bis 260 °C, wie gemäß ASTM D3418 gemessen und in der Beschreibung offenbart, und mit einem Gehalt an Diethylenglykolgruppen von 0,5 bis 2,5 Gew.-%, und
0 bis 5 Gew.-% einer Kombination, umfassend wenigstens eines von einem Färbemittel, einem Antioxidans, einem Formtrennmittel, einem Stabilisierungsmittel, oder einer Kombination davon, bezogen auf 100 Gewichtsteile der Kombination des Polybutylenterephthalats, der Glasfasern und des Polyethylenterephthalats;
(b) wobei wenigstens 10 % der Oberfläche des Gegenstands eine kontinuierliche glänzende Oberfläche aufweist, die einen kontinuierlichen glänzenden Bereich mit einem Glanz von wenigstens 75 Glanzeinheiten, wie bei 60 Grad gemäß ASTM D523 gemessen, bildet; und
(c) wobei der Glanz vom mittleren Glanz weniger als 10 Glanzeinheiten in dem glänzenden Bereich von der endständigen Angussöffnung des Artikels in der Längsrichtung des glänzenden Bereichs, abweicht, wie durch Messen des Inneren des glänzenden Bereichs an jedem von sechs gleichmäßig beabstandeten, benachbarten Orten innerhalb der Grenze des glänzenden Bereichs Berechnen des mittleren Glanzes und folgender Bestimmung der Standardabweichung, bestimmt wird.

2. Der geformte Hohlkörper gemäß Anspruch 1, wobei das Verhältnis von Polybutylenterephthalat zu Polyethylenterephthalat in der Polyesterzusammensetzung von 0,50 bis 1,20 liegt.

3. Der geformte Hohlkörper gemäß einem der Ansprüche 1-2, wobei das Polyethylenterephthalat eine intrinsische Viskosität von 0,50 bis 1,10 dl/g und das Polybutylenterephthalat eine intrinsische Viskosität von 0,5 bis 0,9 dl/g aufweist, wobei Deziliter pro Gramm in einer Kombination von Phenol/1,1,2,2-Tetrachloroethan von 60:40, bezogen auf das Gewicht, bei 23 °C gemessen wird.

4. Der geformte Hohlkörper gemäß einem der Ansprüche 1-3, wobei die Polyesterzusammensetzung außerdem von 0,1 bis 10 Gewichtsprozent, bezogen auf das Gesamtgewicht der Polymere in der Zusammensetzung, eines zusätzlichen Polyesters enthält, der Polyethylennaphthalat, Polybutylennaphthalat, Polytrimethylenterephthalat, Poly(1,4-Cyclohexylendimethylen-1,4-Cyclohexandicarboxylat), Poly(1,4-Cyclohexylendimthylenterephthalat), Poly(Cyclohexylendimethylen-co-Ethylenterephthalat) oder eine Kombination, die wenigstens einen der vorgenannten Polyester enthält, umfasst.

5. Der geformte Hohlkörper gemäß einem der Ansprüche 1-4, wobei die Glasfaser eine Länge von 0,01 bis 1,0 mm aufweist.

6. Der geformte Hohlkörper gemäß einem der Ansprüche 1-5, wobei die Polyesterzusammensetzung außerdem wenigstens eines von
0,01 bis 0,50 Gew.-% eines Antioxidans, das ein Phosphit, ein Phosphonit und Kombinationen davon ist
0,1 bis 1,0 Gew.-% eines Formtrennmittels, ausgewählt aus der Gruppe, bestehend aus aliphatischen Polyestern, Polyalphaolefinen, aliphatischen Polyamiden, Carbonsäuresalzen und Kombinationen davon, und
0,1 bis 5 Gew.-% eines Färbemittels, das Ruß, gegenebenfalls mit einer Partikelgröße von 10 bis 25 nm, Zinksulfid und eine Kombination davon darstellt,
umfasst.

7. Der geformte Hohlkörper gemäß einem der Ansprüche 1-6, wobei die thermoplastische Polyesterzusammensetzung außerdem umfasst:
35 bis 45 Gew.-% Polybutylenterephthalat mit einem Schmelzpunkt von 210 bis 230 °C, und
10 bis 20 Gew.-% einer Vielzahl von Glasfasern mit einem Durchmesser von 9 bis 15 Mikrometern.

8. Der geformte Hohlkörper gemäß einem der Ansprüche 1-7, wobei die Polyesterzusammensetzung in Form von Pellets eine Schmelzviskosität, wie gemäß ASTM D1238 gemessen, bei 265 °C für 360 Sekunden unter Verwendung eines 5 kg Gewichts nach Äquilibrieren für 360 Sekunden von 30 bis 60 cm³/10 min aufweist und nach Äquilibrieren für 1080 Sekunden von 40 bis 90 cm³/10 min aufweist, wobei eine geformte Probe der Polyesterzusammensetzung eine Wärmeableitungstemperatur von wenigstens 200 °C bei 0,455 MPa, wie gemäß ASTM D648 gemessen, zeigt, oder eine Kombination davon.

9. Der geformte Hohlkörper gemäß einem der Ansprüche 1-8, wobei der Gegenstand ein Griff für ein großes Gerät ist.

10. Der geformte Hohlkörper gemäß einem der Anspruch 9, wobei eine geformte Probe der Polyesterzusammensetzung eine Izod-Kerbschlagzähigkeit von wenigstens 40 J/m, wie gemäß ASTM D256 gemessen, aufweist.

11. Der geformte Hohlkörper gemäß einem der Anspruch 9, wobei wenigstens ein Teil der äußeren Oberfläche des Gegenstands eine nichtglänzende oder texturierte Oberfläche aufweist.

12. Ein Verfahren zum Ausbilden des geformten Hohlkörpers gemäß einem der Ansprüche 1-11, wobei das Verfahren umfasst:
Mischen der Komponenten der Polyesterzusammensetzung;
Einführen der Polyesterzusammensetzung als ein geschmolzenes Material in eine Schmelzvorrichtung, die für ein gasunterstütztes Spritzgußverfahren ausgelegt ist;
Einführen eines Gases in die Schmelzvorrichtung, um das geschmolzene Material durch Erstellen eines Gaskanals, der sich wenigstens teilweise durch das geschmolzene Material erstreckt, auszuhöhlen, Expandieren des geschmolzenen Materials und Nachbilden der Oberfläche und der Ausgestaltung der Form;
Abkühlen des geschmolzenen Materials, so dass es ein Festkörper ist; und
Entfernen des festen geformten Hohlkörpers, der gebildet wurde, aus der Schmelzvorrichtung.

13. Das Verfahren gemäß Anspruch 12, wobei der geformte Hohlkörper durch gasunterstütztes Spritzgießen bei einer Schmelztemperatur von 260 bis 290 °C erhalten wird.

14. Ein Verfahren zum Verwenden des geformten Hohlkörpers gemäß einem der Ansprüche 1-13, wobei der Gegenstand einen Griff bildet, der permanent an eine Vorrichtung angebracht ist, wobei das Verfahren das Ergreifen des Griffes und das Bewegen des Gerätes oder eines beweglichen Teiles davon umfasst.

15. Das Verfahren gemäß Anspruch 14, wobei der Handgriff an ein großes Haushaltsgerät angebracht ist.

## Revendications

1. Article moulé creux comprenant une surface dont au moins une partie est une surface brillante, lequel article est moulé intégralement à partir d'une composition de polyester thermoplastique,
(a) la composition comprenant :
28 à 50 % en poids d'un polytéréphtalate de butylène ayant une fusion point compris entre 210 et 230 °C tel que mesuré selon la norme ASTM D3418 et tel que divulgué dans la description
10 à 30 % en poids d'une pluralité de fibres de verre ayant un diamètre compris entre 9 et 20 micromètres,
20 à 62 % en poids d'un polytéréphtalate d'éthylène ayant un point de fusion compris entre 240 et 260 °C tel que mesuré selon la norme ASTM D3418 et tel que divulgué dans la description, et une teneur en groupes diéthylène glycol de 0,5 à 2,5 % en poids, et
0 à 5 % en poids d'une combinaison comprenant au moins l'un parmi un colorant, un antioxydant, un agent de démoulage, un stabilisant ou une combinaison de ceux-ci, sur la base de 100 parties en poids de la combinaison de polytéréphtalte de butylène, des fibres de verre et du polytéréphtalate d'éthylène ;
(b) au moins 10% de la surface de l'article a une surface brillante continue qui forme une région brillante continue ayant une brillance d'au moins 75 unités de brillance, telles que mesurées à 60 degrés conformément à la norme ASTM D523 ; et
(c) la brillance varie de moins de 10 unités de brillance par rapport à la moyenne dans la région brillante, telles que déterminées en mesurant l'intérieur de la région brillante en chacun de six endroits adjacents également espacés dans la limite de la région de brillance, depuis l'extrémité de l'article dans la direction longitudinale de la région brillante, en calculant la brillance moyenne, puis en prenant l'écart-type.

2. Article moulé creux selon la revendication 1, dans lequel le rapport entre polytéréphtalate de butylène et le polytéréphtalate d'éthylène dans la composition de polyester est compris entre 0,50 et 1,20.

3. Article moulé creux selon l'une quelconque des revendications 1 et 2, dans lequel le polytéréphtalate d'éthylène a une viscosité intrinsèque comprise entre 0,50 et 1,10 dl/g et le polytéréphtalate de butylène a une viscosité intrinsèque comprise entre 0,5 et 0,9 dl/g, les décilitres par gramme étant mesurés dans une combinaison 60/40 en poids de phénol/1,1,2,2-tétrachloroéthane à 23 °C

4. Article moulé creux selon l'une quelconque des revendications 1 à 3, dans lequel la composition de polyester comprend en outre entre 0,1 et 10 % en poids, par rapport au poids total des polymères dans la composition, d'un polyester supplémentaire qui est du polynaphtalate d'éthylène, du polynaphtalate de butylène, du polytéréphtalate de triméthylène, du poly(1,4-cyclohexylènediméthylène 1,4-cyclohexanedicarboxylate), du poly(1,4-cyclohexylènediméthylène téréphtalate), du poly(cyclohexylènediméthylène-co-téréphtalate d'éthylène), ou une combinaison comprenant au moins l'un des polyesters précédents.

5. Article moulé creux selon l'une quelconque des revendications 1 à 4, dans lequel la fibre de verre a une longueur comprise entre 0,01 et 1,0 mm.

6. Article moulé creux selon l'une quelconque des revendications 1 à 5, dans lequel la composition de polyester comprend en outre au moins l'un parmi
0,01 à 0,50 % en poids d'un antioxydant qui est un phosphite, un phosphonite et des combinaisons de ceux-ci ;
0,1 à 1,0 % en poids d'un agent de démoulage choisi dans le groupe constitué par : les polyesters aliphatiques, les polyalphaoléfines, les polyamides aliphatiques, les sels d'acides carboxyliques, et des combinaisons de ceux-ci ; et
0,1 à 5 % en poids d'un colorant qui est du noir de carbone, ayant facultativement une taille de particules comprise entre 10 et 25 nm, du sulfure de zinc, et une combinaison de ceux-ci.

7. Article moulé creux selon l'une quelconque des revendications 1 à 6, dans lequel la composition de polyester thermoplastique comprend en outre :
35 à 45 % en poids de polytéréphtalate de butylène ayant un point de fusion compris entre 210 et 230 °C ; et
10 à 20 % en poids d'une pluralité de fibres de verre ayant un diamètre compris entre 9 et 15 micromètres.

8. Article moulé creux selon l'une quelconque des revendications 1 à 7, dans lequel la composition de polyester, sous forme de pastilles, a une viscosité à l'état fondu, telle que mesurée selon la norme ASTM D1238, à 265 °C pendant 360 secondes en utilisant un poids de 5 kg après équilibrage pendant 360 sec, comprise entre 30 et 60 cm³/10 min et, après équilibrage pendant 1 080 sec, comprise entre 40 et 90 cm³/10 min, un échantillon moulé de la composition de polyester présentant une température de déformation thermique d'au moins 200 °C à 0,455 MPa, telle que mesurée selon la norme ASTM D648, ou une combinaison de ceux-ci.

9. Article moulé creux selon l'une quelconque des revendications 1 à 8, dans lequel l'article est une poignée pour un gros appareil.

10. Article moulé creux selon la revendication 9, dans lequel un échantillon moulé de la composition de polyester présente une résistance au choc Izod d'éprouvettes entaillées d'au moins 40 J/m, telle que mesurée selon la norme ASTM D256.

11. Article moulé creux selon la revendication 9, dans lequel au moins une partie de la surface externe de l'article a une surface non brillante ou texturée.

12. Procédé pour former un article moulé creux selon l'une quelconque des revendications 1 à 11, lequel procédé comprend
mélanger les composants de la composition de polyester ;
introduire la composition de polyester en tant que matière fondue dans un appareil de moulage adapté au moulage par injection assisté au gaz ;
introduire un gaz dans l'appareil de moulage pour creuser la matière fondue en produisant un canal de gaz au moins partiellement à travers la matière fondue, en dilatant la matière fondue et en répliquant la surface et la forme du moule ;
refroidir la matière fondue de sorte qu'elle devienne solide ; et
retirer de l'appareil de moulage l'article moulé creux solide formé.

13. Procédé selon la revendication 12, dans lequel l'article moulé creux est obtenu par moulage par injection assisté au gaz à une température de fusion comprise entre 260 et 290 °C.

14. Procédé d'utilisation d'un l'article moulé creux selon l'une quelconque des revendications 1 à 13, dans lequel l'article forme une poignée qui est fixée de manière permanente à un appareil, le procédé comprenant la préhension de la poignée ; et le déplacement de l'appareil ou d'une partie mobile de celui-ci.

15. Procédé selon la revendication 14, dans lequel la poignée est fixée à un gros appareil.
